# EUROPEAN PATENT APPLICATION

(11) **EP 4 790 220 A1**
(43) Date of publication of application: **12.08.2026**
(21) Application number: 26155929.8
(22) Date of filing: 03.02.2026
(51) Int. Cl.: E05F 11/54, E05F 15/53, E05F 15/60, E05F 15/611

(54) **DOOR SYSTEM WITH RELIABLE BACKUP**

(30) Priority: 05.02.2025 SE 2550111
(71) Applicant: Volvo Truck Corporation, 405 08 Göteborg (SE)
(72) Inventor: LEIDEFELDT, Marcus, 418 74 Göteborg (SE); LEMMER, Hans, 416 55 Göteborg (SE); PANTZAR, Linus, 461 94 Trollhättan (SE); EKSTEDT, Carl Johan, 446 34 Älvängen (SE); NORBERG, Patrick, 416 83 Göteborg (SE); MOSTRÖM, Christian, 543 93 Stora Levene (SE); BODIN, Niklas, 413 14 Göteborg (SE)
(74) Representative: AWA Sweden AB

(57) **Abstract**

A door actuating system (100) for operating a door (205) of a heavy vehicle (200), comprising a primary actuator (10) having a first end (11) coupled to a door of the vehicle and a second opposite end (12) coupled to a vehicle structure (210), wherein the primary actuator is configured to move between an extended state (Pₑₓₜ) and an compressed state (P_{comp}) with a powered operation, and a secondary failsafe actuator (20) configured to move between an extended state (Sₑₓₜ) and a compressed state (S_{comp}) with a manual operation, wherein the primary actuator and the secondary failsafe actuator are arranged in series between the door of the vehicle and the vehicle structure. Also, a method and a vehicle with such actuating system is disclosed.

## Description

### TECHNICAL FIELD

The disclosure relates generally to doors in heavy vehicles. In particular aspects, the disclosure relates to door opening systems. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In heavy-duty vehicles, heavy doors may be used for various reasons. Such doors may be provided with an actuation system to assist in opening and closing the doors of the vehicle. This may be of particular relevance if the door needs to be opened or closed while the vehicle is oriented in some inclination relative to ground surface where the force deriving from gravity is significant.

Current state of art actuation systems may include a linear actuator fastened at one end to the door and at the other end to a cabin structure of the vehicle. The actuator can extend or retract in length so as to force the door to open or close. Such actuators typically need the energy of the vehicle battery to operate, which is a risk factor for being able to open or close the doors as the battery may drain out, malfunction due to electrical or electronic issues, etc. This risk is currently reduced by a backup battery which may be used if the main battery is disconnected or depleted.

### SUMMARY

The invention is based on the inventors realization that instead of relying on an energy storage system, such as a back-up battery, which can be depleted or set out of use from sabotage or malfunctioning whereby the door opening functioning is affected, an actuating system comprising a fail-safe manual actuator combined with a primary actuator is provided. The actuating system increases operability of the vehicle door opening system and reduce the risk of occupants being trapped inside the vehicle.

According to a first aspect of the disclosure, a door actuating system for operating a door of a heavy vehicle is disclosed. The actuating system comprises a primary actuator having a first end coupled to a door of the vehicle and a second opposite end coupled to a vehicle structure, wherein the primary actuator is configured to move between a compressed state and an extended state with a powered operation, and a secondary failsafe actuator configured to move between a compressed state and an extended state with a manual operation, wherein the primary actuator and the secondary failsafe actuator are arranged in series between the door of the vehicle and the vehicle structure.

The first aspect of the disclosure may seek to reducing the risk of occupants being trapped inside a vehicle with heavy doors. A technical benefit may include a door opening system that provides a failsafe and secure way of opening heavy doors on vehicles. By having a secondary failsafe actuator, the door may be opened if the primary actuator is not functional. Such malfunction may be due to loss of battery power but could also be an electronic or mechanical malfunction due to an accident or a sabotage. By having a secondary failsafe actuator arranged in series with the primary actuator and which can be operated manually, a vehicle occupant may avoid getting trapped in the vehicle. The fact that the primary actuator and the secondary failsafe actuator are arranged in series between the door of the vehicle and the vehicle structure makes the function very robust, as the function of the the secondary failsafe actuator will work regardless if the primary actuator is inoperable or not.

The second opposite end of the primary actuator may be coupled to the vehicle structure via the secondary failsafe actuator. Thus, "coupled to" in the context of this application does not exclude intermediate members

Optionally in some examples, including in at least one preferred example, the primary actuator and the secondary failsafe actuator are independently movable between their respective compressed state and extended state. A technical benefit may hereby include that even if the primary actuator is malfunctioning or even locked in its compressed state, the secondary failsafe actuator may open the door of the vehicle. Hereby, the failsafe functionality of the door actuating system becomes even more robust and safe.

Optionally in some examples, including in at least one preferred example, the powered operation is at least one of an electronic, pneumatic or hydraulic operation. A technical benefit may include that the primary actuator may be initiated without any manual power and provide a convenient way of opening and closing the door of the vehicle for a driver or passenger. In heavy vehicles, especially when driven in a terrain with inclination, doors may be very heavy to open (and/or close). The powered operation alleviates the handling for the driver and/or occupants.

Optionally in some examples, including in at least one preferred example, the primary actuator is a linear actuator or hydraulic cylinder. A technical benefit may include that the linear actuator may provide a high speed and superior control possibilities which allows for fast and exact operation of the door opening and closing. A hydraulic cylinder is powerful comparable to its size when compared with linear actuators.

Optionally in some examples, including in at least one preferred example, the linear actuator is an electric linear actuator or a hydraulic actuator driven by an electric motor. A technical benefit may include that a control circuit may be arranged to control the speed and/or force of the linear actuator with a software when the powered operation is driven by electricity.

Optionally in some examples, including in at least one preferred example, the secondary failsafe actuator is a pneumatic jack or hydraulic jack configured to be used with a manual pump. A technical benefit may include that the secondary failsafe actuator is achieved with a mechanical construction with established technology and few components that can malfunction. Further, a pneumatic or hydraulic operation is a manual operation that can achieve great forces even when manually pumped. That allows a door to be pumped open even if there is a strong inclination, or if the heavy vehicle lies on a side with the door upwards.

Optionally in some examples, including in at least one preferred example, the secondary failsafe actuator is configured to be passive under normal operation of the first actuator and acting as a linkage between the first actuator and the door or vehicle structure. A technical benefit may include that the failsafe actuator is only used actively when the powered operation is not operable. By being a stiff linkage, the secondary failsafe actuator does not affect the opening/closing of the door under normal circumstances which simplifies the control of the powered operation of the primary actuator.

Optionally in some examples, including in at least one preferred example, the secondary failsafe actuator comprises a first drive coupling for coupling a manual pump to the secondary failsafe actuator, wherein said first drive coupling is arranged inside the vehicle. A technical benefit may include that an occupant of the vehicle may manually connect a pump inside the cabin of the vehicle to the secondary failsafe actuator and initiate an opening (or closing) of the door from inside the vehicle.

Optionally in some examples, including in at least one preferred example, the secondary failsafe actuator comprises a second drive coupling for coupling a manual pump to the secondary failsafe actuator, wherein said second drive coupling is arranged outside the vehicle. A technical benefit may include that a person outside the vehicle, such as for example a rescue team, may manually connect a pump from outside the vehicle to the secondary failsafe actuator and initiate an opening (or closing) of the door from outside of the vehicle. This may be of use e.g., in an accident, if the occupant(s) cannot initiate the manual pumping him-, her- or themselves.

Optionally in some examples, including in at least one preferred example, the door actuating system according further comprise a stand-alone hand operated pump configured to manually operate the secondary failsafe actuator. A technical benefit may include that if the system comprises a dedicated stand-alone hand operated pump it can be adapted to be easily coupled to the secondary failsafe actuator and/or adapted to be easily stored in the vehicle in a dedicated space.

Optionally in some examples, including in at least one preferred example, the secondary failsafe actuator is sized and adapted to exert a force between the door and the vehicle structure of at least 5kN, preferably 10kN and more preferably 13kN. A technical benefit may include that a very heavy door may be opened even if the inclination was severe. It could even be opened if the cabin of the vehicle would lie on its side after an accident.

Optionally in some examples, including in at least one preferred example, the primary actuator is coupled to the door of the vehicle in the first end, and in the second opposite end coupled to the secondary failsafe actuator, and wherein the second failsafe actuator is further coupled to the structure of the vehicle, wherein the primary actuator is a linear actuator driven by an electrical motor and the secondary failsafe actuator is a pneumatic jack or hydraulic jack and is configured to be driven by a stand-alone manual pump. A technical benefit may include that the setup allows a good combination of a hydraulic cylinder which is strong comparable to its size and for use during failsafe operation only, and a linear actuator that has good speed and superior control possibilities which is used during normal operation.

Optionally in some examples, including in at least one preferred example, a first one of the primary actuators and the secondary failsafe actuator is arranged to move the other one of the primary actuator and the secondary failsafe actuator between its respective extended state and compressed state. A technical benefit may include that the secondary failsafe actuator may be used to control the extension of the first actuator.

According to a second aspect of the disclosure, a heavy vehicle is provided with a door actuating system according to any one of the examples given above. The second aspect of the disclosure may seek to provide a vehicle with a door opening system that decrease the risk of an occupant being trapped inside the vehicle. A technical benefit may include having a reliable door opening function even if the primary door opening system malfunctions or is sabotaged.

Optionally in some examples, including in at least one preferred example, the vehicle comprise more than one door actuating system. In some examples, the vehicle comprise at least two door actuating systems. In some examples, the vehicle comprise at least two door actuating systems wherein one is located on the right hand side when driving and one is located on the left hand side when driving. In some examples, the vehicle comprise one actuating systems per door of the vehicle. The door actuating systems may be identical each door. Hereby, occupants of the vehicle may use the closest door to exit and enter. Also, if the vehicle has been overturned on one side, the door on the other side may be opened.

According to a third aspect of the disclosure, a method for operating a door actuating system of a heavy vehicle is provided. The door actuating system comprise a primary actuator having a first end coupled to a door of the vehicle and a second opposite end coupled to a vehicle structure, and a secondary failsafe actuator, wherein the primary actuator and the secondary failsafe actuator are arranged in series between the door of the vehicle and the vehicle structure. The method comprises the steps o during normal operation moving the primary actuator between an extended state and a compressed state with a powered operation for opening and closing the door of the vehicle, and during a failsafe operation moving the secondary failsafe actuator between an extended state and a compressed state with a manual operation.

Technical benefits are in large analogous to the previously described benefits of the system and vehicle and may include having a reliable door opening function even if the primary door opening system malfunctions or is sabotaged.

Optionally in some examples, including in at least one preferred example, the secondary failsafe actuator is kept in a static position during normal operation. A technical benefit may include that this provides a simple system which is less likely to have issues since when the secondary failsafe actuator is not in use it is merely used as a stiff link between the primary actuator and the door of the vehicle or between the primary actuator and vehicle structure.

Optionally in some examples, including in at least one preferred example, the primary actuator is kept in a static position during failsafe operation. A technical benefit may include that this provides a simple system which is less likely to have issues since when the primary actuator is not in use, i.e. during failsafe operation, it is merely used as a stiff link between the secondary failsafe actuator and the door of the vehicle or between the secondary failsafe actuator and vehicle structure.

Optionally in some examples, including in at least one preferred example, the failsafe operation is performed after coupling a manual pump inside the vehicle to a first drive coupling of the secondary failsafe actuator. A technical benefit may include that the manual operation may be conducted by means of a pump which increase pressure so as to expand the secondary failsafe actuator, and which can be operated by a person inside the vehicle.

Optionally in some examples, including in at least one preferred example, the failsafe operation is performed after coupling a manual pump outside the vehicle to a second drive coupling of the secondary failsafe actuator. A technical benefit may include that the manual operation may be conducted by means of a pump which increase pressure so as to expand the secondary failsafe actuator, and which can be operated by a person outside of the vehicle.

Optionally in some examples, including in at least one preferred example, the pump may pump a fluid. The fluid may be a hydraulic fluid or air.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG.** 1 is an exemplary perspective illustration from the entrance angle of a cabin with a door actuating system according to an example.
FIG. 2 is an exemplary cross-sectional illustration of a cabin from the rear of the cabin with a door actuating system according to an example.
**FIG.** 3 is an exemplary close-up illustration of a door actuating system according to an example.
FIG. 4a is an exemplary schematic illustration of a door actuating system according to an example where both the primary and secondary actuators are in a compressed state according to an example.
FIG. **4b** is an exemplary schematic illustration of a door actuating system according to an example where the primary actuator is in an extended state and the secondary failsafe actuator is in a compressed state according to an example.
**FIG. 4c** is an exemplary schematic illustration of a door actuating system according to an example where the primary actuator is in a compressed state and the secondary failsafe actuator is in an extended state according to an example.
FIG. 5 is a flow chart of an exemplary method to operate a door actuating system according to an example.
**FIG.** 6 is an exemplary schematic illustration of a heavy vehicle comprising a door actuating system according to an example.

### DETAILED DESCRIPTION

The detailed description set forth below provides information and examples of the disclosed technology with sufficient detail to enable those skilled in the art to practice the disclosure.

As mentioned above, the examples herein may alleviate the problem of getting trapped inside a vehicle if the door opening system malfunctions. The examples illustrated will be described in detail below, each figure at a time.

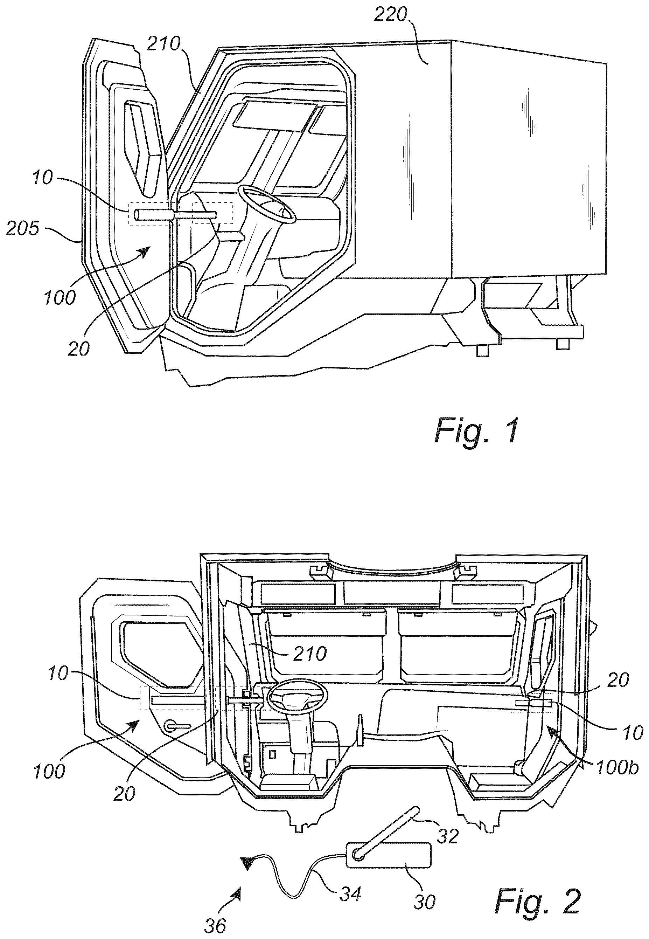

**FIG. 1** is an exemplary perspective illustration of the door actuating system 100 in a heavy vehicle 200 from the entrance angle of a cabin 220 according to an example. The heavy vehicle 200 may be any type of heavy-duty vehicle that benefits from having heavy doors. Adoor 205 in open condition is illustrated in the figure. The door 205 connects to the vehicle at a vehicle structure 210. The vehicle structure should be understood as any type of vehicle part that the door may pivot relative to, in order to be opened and closed. The vehicle structure may be a framing of the cabin 220.

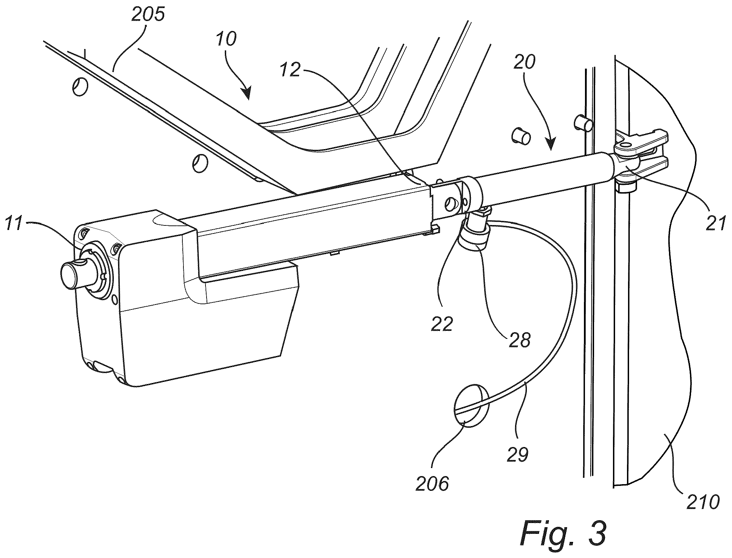

The actuating system 100 comprises a primary actuator 10 which will be described more in detail in relation to Figs 3-4c. The primary actuator is sized and adapted to move between a compressed state P_{comp} and an extended state Pₑₓₜ with a powered operation, which opens and closes the door 205 relative the cabin 220 during normal usage.

The actuating system 100 further comprises a secondary failsafe actuator 20 that is sized and adapted to move between a compressed state S_{comp} and an extended state Sₑₓₜ with a manual operation which opens and closes the door 205 relative the cabin 220 during a failsafe manual usage, in which the powered operation of the primary actuator is not available or functional.

FIG. 2 is a cross-sectional illustration of the same cabin 220 as illustrated in Fig. 1, but from the rear of the cabin. The door actuating system 100 is illustrated in the same opened state as in fig. 1 on the left-hand side of the cabin. On the righthand side, on the passenger side in the illustrated example, a further door actuating system 100b is illustrated which also comprises a primary actuator 10 and a secondary failsafe actuator 20. On the passenger side the door actuating system is in a non-actuated state, i.e. the passenger door is closed. The door actuating system may be identical on both sides of the vehicle. If there are more than two doors on the vehicle, any or each door may be equipped with the door actuating system 100 as described herein.

FIG. 2 further illustrates a stand-alone manual pump 30 for operating the secondary failsafe actuator in a manual mode. The pump 30 comprises a lever 32 for creating a pressure of a fluid, such as air, hydraulic oil or water, though a hose 34 and to a connecting interface 36. The hose may be substituted with a pipe. The manual pump may allow a user to manually couple the connecting interface 36 of the pump to the secondary failsafe actuator 20 and operate it manually.

Although Fig. 2 illustrates that two door actuating systems 100, 100b are installed (one on each door) it is possible to have a system where only one door is provided with the door actuating system 100.

FIG. 3 is an exemplary close-up illustration of the door actuating system 100 according to an example as has been described above. The door actuating system comprises a primary actuator 10. The primary actuator 10 comprises a first end 11. In the illustrated example, this is the outer part of the actuator, towards the end of the door away from the cabin when the door is opened. The first end 11 is herein coupled to the door 205 of the vehicle 200. The primary actuator 10 further comprise a second opposite end 12, in this figure it is illustrated towards the vehicle structure 210. This end is illustrated to be coupled to the vehicle structure 210. In the illustrated example the second end 12 is coupled to the vehicle structure 210 via the secondary failsafe actuator 20. It is also possible that the first end as described here above is named the second end and the other way around, without departing from the inventive solution.

Further, the secondary failsafe actuator 20 is illustrated inwards of the primary actuator, i.e. closer to the vehicle structure 210 where the door is hinged to the vehicle structure than the distal part of the door 205. It is however possible to change the place of the two actuators so that the primary actuator is closest to the cabin. The secondary failsafe actuator 20 is configured to move between a compressed state S_{comp} and an extended state Sₑₓₜ with a manual operation. The secondary failsafe actuator 20 also comprises a first end 21 which herein is illustrated as being coupled to the vehicle structure 210. The secondary failsafe actuator 20 further also comprise a second end 22 which herein is illustrated as being coupled to the first actuator 10.

As can be seen in all of the illustrated examples, the primary actuator 10 and the secondary failsafe actuator 20 are arranged in series between the door 205 of the vehicle and the vehicle structure 210. This is one way of making the system failsafe, as the function of the secondary failsafe actuator 20 is not dependent on that the primary actuator 10 is movable, and vice versa. Instead, in a preferred example the actuators moves one at a time, and the other one of the two actuators merely acts as a stiff linkage between the moving actuator and the door 205 or vehicle structure 210.

FIG. 3 further illustrates that the secondary actuator has a first drive coupling 28. The drive coupling may e.g., be a hydraulic couple such as a quick connect coupling. It may alternatively be a pneumatic connector if the pump is a pneumatic pump. The drive coupling 28 is adapted to fluidly couple the manual pump 30 to the secondary failsafe actuator 20, wherein said first drive coupling is arranged inside the vehicle 200.

The door 205 may further comprise an aperture 206 in which a second drive coupling 29 for coupling the manual pump 30 to the secondary failsafe actuator 20. The second drive coupling 29 is herein illustrated as a hose (could be a hydraulic hose or a pneumatic hose). The hose is lead to the outside of the vehicle through the aperture. In one example, the hose ends in a second hydraulic couple such as a quick connect coupling. It may alternatively be a pneumatic connector if the pump is a pneumatic pump. The second drive coupling 29 is arranged outside the vehicle so that a person outside of the vehicle may use a manual pump 30 to open up the door by expanding the secondary failsafe actuator 20.

In some examples, the door actuating system may be covered in a door casing on the inside of the vehicle. In such case, the first drive coupling would be exposed so that it is easily accessed from inside the vehicle.

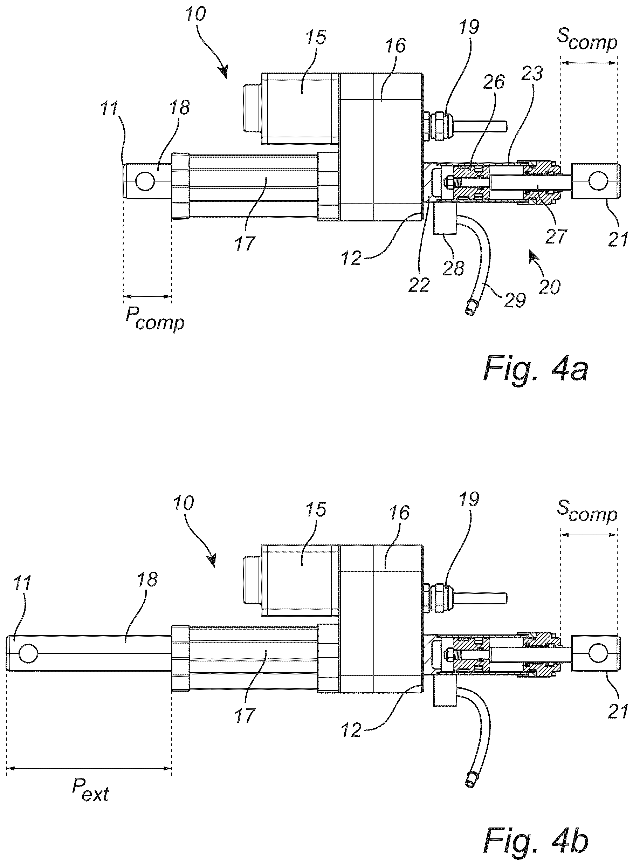

**FIG. 4a** **-** **FIG. 4c** are exemplary schematic illustrations of the door actuating system according to an example in which each drawing illustrates different states of the door actuating system 100.

In these figures, the first primary actuator is a is a linear actuator driven by an electrical motor 15. The linear actuator further has a gear box 16 which transfers the rotating drive of the motor 15 into a rotation of a lead screw 17 being enclosed in the figures. The leadscrew 17 creates a translative motion of a moving rod end 19 when the motor 15 is run. The motor 15 is controlled by an electric circuit connected to a power connector 19. When the motor 15 is run in a first direction the rod end 19 will move to extend the length of the primary actuator. The motor 15 is moved in the other direction, the rod end 19 will move to compress the length of the primary actuator 10. The motor 15 can be controlled to open the door faster or slower by changing the speed of the motor 15. In some examples the motor 15 may have a varied speed when opening the door 205, e.g., a slower start than a middle part and/or a slower end motion than the middle part. Such motion may reduce wear on the components and reduce risk of accidents.

Moving on to the secondary failsafe actuator 20, it is illustrated in figs. 4a-4c as a hydraulic (or alternatively pneumatic) actuator that is configured to be manually driven. The secondary failsafe actuator 20 comprise a hydraulic cylinder 23 that houses a moving piston 26 onto which a moving rod 27 is coupled so that a movement of the piston 26 in the hydraulic cylinder 23 alters the length of the secondary failsafe actuator. When a fluid (e.g., hydraulic fluid or air) is pumped into the first drive coupling 28 or second drive coupling 29, the pressure is increased on the first end of the piston, which moves the piston towards an extension. If instead the fluid (e.g., hydraulic fluid or air) is let out or pumped out from the first drive coupling 28 or second drive coupling 29, the pressure is decreased on the first end of the piston 26, which moves the piston 26 towards a compressed state, or at least allows a movement towards the compressed state. Hereby, the first end 21 of the secondary failsafe actuator 20 presses the door of from the vehicle structure when the piston is moved towards the extended state.

Moving on to the different states illustrated in the different drawings, it can be seen in FIG. 4a that both the primary and secondary actuators are in a compressed state. The primary actuator is in a compressed state P_{comp} meaning that the lead screw 17 is driven into the non-extended state. Also, the secondary failsafe actuator 20 is in a compressed state S_{comp} meaning that the piston 26 is in a position towards the second end 22 of the secondary failsafe actuator. This state, as shown in FIG. 4a is the normal operating state of the vehicle when the door 205 is closed.

It has been mentioned before, but will again be pointed out, that the actuators may be reversed in the orientation so that the first ends are oriented inwards, and the second ends are oriented outwards, without departing from the general idea described herein.

In FIG. 4b the primary actuator 10 has been moved into an extended state Pₑₓₜ. However, the secondary failsafe actuator 20 is still in the compressed state S_{comp}. The primary actuator has been moved by driving the motor 15 and via the gearbox 16 rotating the leadscrew into the extended state. This state, as shown in FIG. 4b is the state of the door actuating system 100 when being opened during normal operation. This is illustrated by the longer arrow under Pₑₓₜ that illustrates the length of the current stroke.

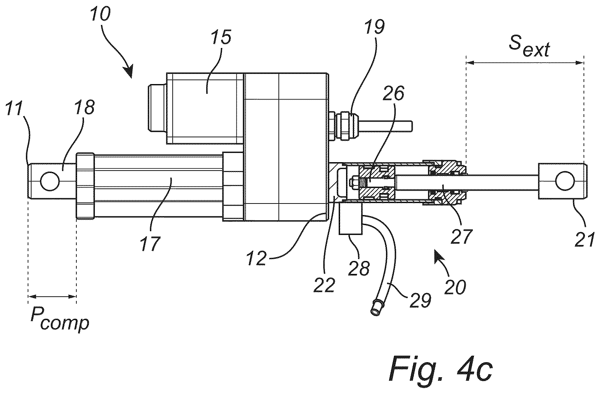

**In** **FIG. 4c** the primary actuator 10 is back in the compressed state P_{comp} as previously described in relation to figure 4a. However, the secondary failsafe actuator 20 is herein moved into the extended state Sₑₓₜ. As described above, this has occurred due to a manual operation of the secondary failsafe actuator 20. This may have been achieved by pumping a fluid into the hydraulic cylinder 23, which have moved the piston 26 into the extended state. This is illustrated by the longer arrow under Sₑₓₜ that illustrates the length of the current stroke.

In some examples, the secondary failsafe actuator is capable of being moved back to the compressed state by either pumping out the fluid from the cylinder, or by simply opening an outlet and letting out the fluid from the cylinder when manually closing the door.

In some examples is it possible to manually pump the secondary failsafe actuator 20 into the compressed state, so as to force a closing of the door with the manual operation. This may be achieved by either attaching the pump to the other side of the piston of the hydraulic cylinder, or by moving a valve so that a rebound stroke is fluidly coupled to the first or second drive coupling 28, 29.

The stroke length of the primary actuator 10 is preferably between 150mm and 450mm, more preferably 250-350mm. In the illustrated example a stroke length of about 300mm was used. For the setup used this corresponded to a 90 degree opening of the door.

The stroke length of the secondary failsafe actuator 20 may be the same as the primary actuator, i.e., between 150mm and 450mm, more preferably 250-350mm. However, in some examples the stroke length of the second failsafe actuator may be shorter than the stroke length of the primary actuator. E.g., the stroke length of the second failsafe actuator may be about 80%, 60%, 50%. 40% or 30% of the stroke length of the primary actuator. This could have the benefit of making a more space efficient door actuating system. Also, since the secondary failsafe actuator is only operated in a failsafe mode, it may be sufficient with being able to open the door to a smaller opening angle than during normal use. In the illustrated example a stroke length of about 130mm was used for the secondary failsafe actuator 20. This corresponded to a 30 degrees opening of the door. Other examples may include having a length that correspond to 45 degrees or 60 degrees. The stroke length of the secondary failsafe actuator may correspond to an emergency exit opening being one of 30 degrees or more, 45 degrees or more or 60 degrees or more.

The primary actuator and the secondary failsafe actuator are preferably sized and adapted to exert a force between the door and the vehicle structure of at least 5kN, preferably at least 10kN and more preferably at least 13kN.

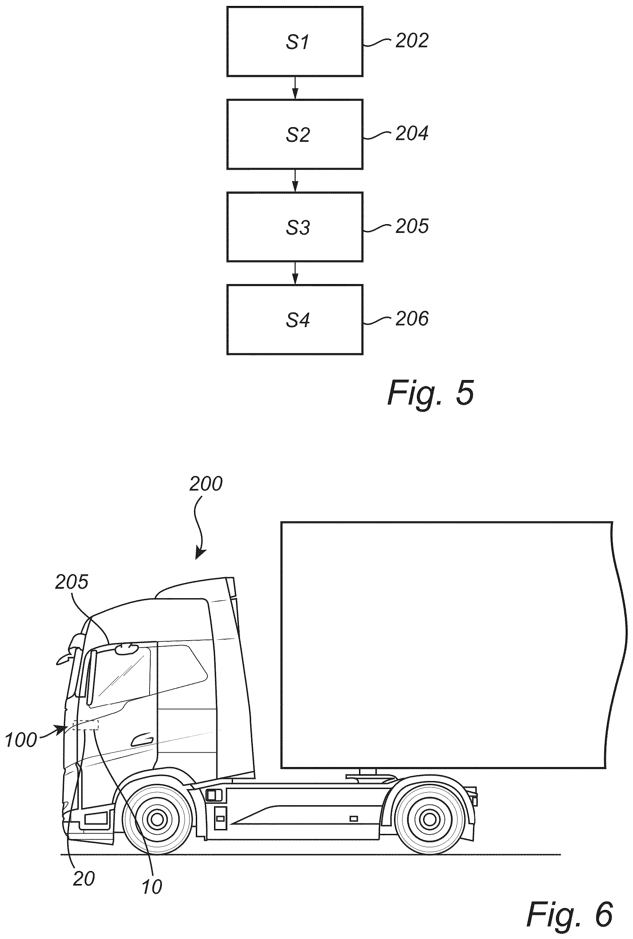

**FIG. 5** is a flow chart of an exemplary method to operate a door actuating system according to an example. The method is used for operating a door actuating system 100 of a heavy vehicle 200 according to any one of the examples given above. Therefore, any structure of function described above is equally relevant for the method as described herein.

The method includes the activity to, during normal operation, moving S1 the primary actuator between the compressed state and the extended state, as has been described above, with a powered operation. This movement will result in opening and closing the door of the vehicle. The powered operation may by any one of the powered operations as has been described above. Further, the method includes to, during a failsafe operation, moving S4 the secondary failsafe actuator 20 between a compressed state S_{comp} and an extended state Sₑₓₜ with a manual operation. The manual operation may be any one of the manual operations as has been described above.

Further, the method preferably includes keeping the secondary failsafe actuator 20 in a static position during normal operation. This allows a simpler control of the primary actuator 10, as it is the only moving part.

Further, the method preferably includes keeping the primary actuator in a static position during failsafe operation. This is preferred as it makes the failsafe operation more robust and independent on the function of the primary actuator.

The flowchart in FIG. 5 further illustrates an action of coupling S2 a manual pump 30 inside the vehicle 200 to a first drive coupling 28 of the secondary failsafe actuator 20 before manually operating the secondary failsafe actuator 20. Hereby, the secondary failsafe actuator 20 may be actuated with a pump from the inside of the vehicle 200.

The flowchart in **FIG. 5** further illustrates an alternative action of coupling S3 the manual pump 30 outside the vehicle 200 to a second drive coupling 29 of the secondary failsafe actuator before manually operating the secondary failsafe actuator 20. Hereby, the secondary failsafe actuator 20 may be actuated with a pump from the outside of the vehicle 200.

**FIG. 6** is an exemplary schematic illustration of a heavy vehicle 200 comprising a door actuating system 100 according to an example. The door 205 is equipped with the primary actuator 10 and the secondary failsafe actuator 20 as have been described above. The system may be used in any vehicle that benefits from having door actuating system and is especially relevant to vehicles with heavy doors. Further, vehicles that are used in terrain that has a higher risk of being in steep inclination environment, and vehicles that are risking overturning so that the door needs to be opened substantially away from gravitation have great use for this type of systems.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A door actuating system (100) for operating a door (205) of a heavy vehicle (200), comprising:
- a primary actuator (10) having a first end (11) coupled to a door of the vehicle and a second opposite end (12) coupled to a vehicle structure (210), wherein the primary actuator is configured to move between a compressed state (P_{comp}) and an extended state (Pₑₓₜ) with a powered operation, and
- a secondary failsafe actuator (20) configured to move between a compressed state (S_{comp}) and an extended state (Sₑₓₜ) with a manual operation, wherein the primary actuator and the secondary failsafe actuator are arranged in series between the door of the vehicle and the vehicle structure.

2. The door actuating system (100) according to claim 1, wherein the primary actuator (10) and the secondary failsafe actuator (20) are independently movable between their respective compressed state (P_{comp}; S_{comp}) and extended state (Pₑₓₜ; Sₑₓₜ).

3. The door actuating system according to any one of claims 1-2, wherein the powered operation is at least one of an electronic, pneumatic or hydraulic operation.

4. The door actuating system according to any one of claims 1-3, wherein the primary actuator (10) is a linear actuator or hydraulic cylinder.

5. The door actuating system according to 4, wherein the linear actuator is an electric linear actuator or a hydraulic actuator driven by an electric motor (15).

6. The door actuating system according to any one of claims 1-5, wherein the secondary failsafe actuator (20) is a pneumatic jack or hydraulic jack configured to be used with a manual pump (30).

7. The door actuating system according to any one of claims 1-6, wherein the secondary failsafe actuator (20) is configured to be passive under normal operation of the first actuator and acting as a linkage between the first actuator (10) and the door (205) or vehicle structure (210).

8. The door actuating system according to any one of claims 1-7, wherein the secondary failsafe actuator (20) comprises a first drive coupling (28) for coupling a manual pump (30) to the secondary failsafe actuator, wherein said first drive coupling is arranged inside the vehicle (200).

9. The door actuating system according to claim 8, wherein the secondary failsafe actuator comprises a second drive coupling (29) for coupling a manual pump to the secondary failsafe actuator, wherein said second drive coupling is arranged outside the vehicle.

10. The door actuating system according to any one of claims 1-9, further comprising a stand-alone hand operated pump (30) configured to manually operate the secondary failsafe actuator.

11. The door actuating system according to any one of claims 1-10, wherein the secondary failsafe actuator is sized and adapted to exert a force between the door and the vehicle structure of at least 5kN, preferably at least 10kN and more preferably at least 13kN.

12. The door actuating system according to any one of claims 1-11, wherein the primary actuator (10) is coupled to the door (205) of the vehicle in the first end (11), and in the second opposite end (12) coupled to the secondary failsafe actuator (20), and wherein the second failsafe actuator is further coupled to the structure of the vehicle (210), wherein the primary actuator is a linear actuator driven by an electrical motor (15) and the secondary failsafe actuator is a pneumatic jack or hydraulic jack and is configured to be driven by a stand-alone manual pump (30).

13. The door actuating system (100) according to claim 1, wherein the a first one of the primary actuator (10) and the secondary failsafe actuator (20) is arranged to move the other one of the primary actuator (10) and the secondary failsafe actuator (20) between its respective extended state (Pₑₓₜ ; Sₑₓₜ) and compressed state(P_{comp} ; S_{comp}).

14. A heavy vehicle (200) comprising the door actuating system (100) according to any one of claims 1-12.

15. A method for operating a door actuating system (100) of a heavy vehicle (200) comprising a primary actuator (10) having a first end coupled to a door (205) of the vehicle and a second opposite end coupled to a vehicle structure (210), and a secondary failsafe actuator (20), wherein the primary actuator and the secondary failsafe actuator are arranged in series between the door of the vehicle and the vehicle structure the method comprising:
- during normal operation moving (S1) the primary actuator between an extended state (Pₑₓₜ) and a compressed state (P_{comp}) with a powered operation for opening and closing the door of the vehicle, and
- during a failsafe operation moving (S4) the secondary failsafe actuator between a compressed state (S_{comp}) and an extended state (Sₑₓₜ) with a manual operation.

16. The method according to claim 15, wherein the secondary failsafe actuator is kept in a static position during normal operation.

17. The method according to any one of claims 15 or 16, wherein the primary actuator is kept in a static position during failsafe operation.

18. The method according to any one of claims 15-17, wherein the failsafe operation is performed after coupling (S3) a manual pump (30) inside the vehicle to a first drive coupling of the secondary failsafe actuator.

19. The method according to any one of claims 15-17, wherein the failsafe operation is performed after coupling (S4) a manual pump outside the vehicle to a second drive coupling of the secondary failsafe actuator.
